# EUROPEAN PATENT SPECIFICATION

(11) **EP 3 889 637 B1**
(45) Date of publication and mention of the grant of the patent: **12.02.2025**
(21) Application number: 20200030.3
(22) Date of filing: 05.10.2020
(51) Int. Cl.: G01S 7/41, G01S 13/50, G01S 13/86, G06F 3/01, G06F 3/0346

(54) **METHOD AND DEVICE FOR GESTURE DETECTION, MOBILE TERMINAL AND STORAGE MEDIUM**
VERFAHREN UND VORRICHTUNG ZUR GESTENERKENNUNG, MOBILES ENDGERÄT UND SPEICHERMEDIUM
PROCÉDÉ ET DISPOSITIF DE DÉTECTION DE GESTE, TERMINAL MOBILE ET SUPPORT D'ENREGISTREMENT

(30) Priority: 03.04.2020 CN 202010257410
(43) Date of publication of application: 06.10.2021
(73) Proprietor: Beijing Xiaomi Mobile Software Co., Ltd., Beijing 100085 (CN)
(72) Inventor: LI, Jinlong, Beijing, 100085 (CN)
(74) Representative: Dehns Germany Partnerschaft mbB

(56) References cited:
- US-A1- 2012 280 900
- US-A1- 2019 383 903

## Description

### TECHNICAL FIELD

The present disclosure generally relates to the field of intelligent control, and particularly, to a method and device for gesture detection, a mobile terminal and a storage medium.

### BACKGROUND

When unlocking or control is implemented by detecting a gesture through a mobile phone, an attitude of the gesture is usually determined through a radar sensor arranged in the mobile phone to further recognize and determine the gesture. By this detection method, when a transmitter of a radar wave, i.e. the mobile phone, is fixed and vertical to the ground, an accurate result may be obtained. However, the mobile phone is a mobile device that, in use, cannot be kept stable and maintained at a perfect vertical attitude angle. In such case, detected gesture data may be wrong. US2012280900A1 discloses an apparatus comprising a processor; a user interface enabling user interaction with one or more software applications associated with the processor; first and second sensors configured to detect, and generate signals corresponding to, objects located within respective first and second sensing zones remote from the apparatus, wherein the sensors are configured such that their respective sensing zones overlap spatially to define a third, overlapping, zone in which both the first and second sensors are able to detect a common object; and a gesture recognition system for receiving signals from the sensors, the gesture recognition system being responsive to detecting an object inside the overlapping zone to control a first user interface function in accordance with signals received from both sensors. US2019383903A1 discloses a gesture recognition system including a Frequency modulated continuous waveform radar system. First and second channels of the signal reflected by the object are preprocessed and respectively sent to first and second feature map generators. A machine-learning accelerator is configured to receive output from the first and second feature map generators and form frames fed to a deep neural network realized with a hardware processor array for gesture recognition. A memory stores a compressed set of weights as fixed-point, low rank matrices that are directly treated as weights of the deep neural network during inference.

### SUMMARY

The present disclosure provides a method and device for gesture detection, a mobile terminal and a storage medium.

According to a first aspect of the present disclosure, a method for gesture detection applicable to a mobile terminal is provided as defined by claim 1.

According to a second aspect of the present disclosure, a mobile terminal is provided as defined by claim 4.

According to a third aspect of the present disclosure, a device for gesture detection is also provided as defined by claim 7.

According to a fourth aspect of the present disclosure, a non-transitory computer-readable storage medium is provided as defined by claim 10.

The technical solutions provided in the embodiments of the present disclosure may have the following beneficial effects.

According to the embodiments of the present disclosure, a terminal motion parameter of a mobile terminal may be detected, and a first relative motion parameter of an object to be detected in an influence scope of a radar wave relative to the mobile terminal may be corrected based on the obtained terminal motion parameter to obtain a second relative motion parameter. In such a manner, based on the first relative motion parameter, detected based on the radar wave, of the object to be detected and considering the impact of a motion of the mobile terminal on the first relative motion parameter, the first relative motion parameter may be corrected based on the detected terminal motion parameter to obtain a parameter of relative motion (the second relative motion parameter) of the object to be detected to the mobile terminal more accurately. After the more accurate relative motion parameter is obtained, the more accurate second relative motion parameter may be processed by machine learning through a preset gesture recognition model, so that a gesture recognition result can be more accurate.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 shows two recognition errors that may occur during use of a mobile terminal according to an example not being part of the invention.
FIG. 2 is a first flowchart showing a method for gesture detection according to an embodiment.
FIG. 3 is a schematic diagram illustrating a first relative motion parameter of a palm relative to a mobile terminal according to an exemplary embodiment.
FIG. 4 is a second flowchart showing a method for gesture detection according to an embodiment.
FIG. 5 is a third flowchart showing a method for gesture detection according to an exemplary embodiment.
FIG. 6 is a structure block diagram of a mobile terminal according to an embodiment.
FIG. 7 is a block diagram of a device for gesture detection according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

A principle for detecting a gesture through a mobile terminal is that: a radar sensor is mounted in a mobile phone, a parameter of relative motion the radar sensor to a palm is calculated, and then a gesture is determined based on the parameter of relative motion. Based on this detection method, when the radar sensor is fixed and vertical to the ground, an accurate result may be obtained. However, during an actual application, in use of the mobile terminal such as the mobile phone, the mobile phone cannot be kept stable and maintained at a perfect vertical attitude angle. The radar sensor may move accordingly. For example, during walking, the mobile terminal may vibrate or be inclined at a certain angle, and in such case, a recognition error may occur.

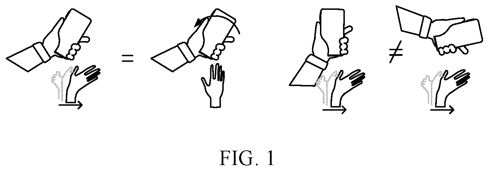

FIG. 1 shows two recognition errors that may occur during use of a mobile terminal according to an example not being part of the invention. As shown in the left part of FIG. 1, a user does not wave the hand, but if the mobile terminal excessively shakes leftwards and rightwards, it is equivalent to a leftward and rightward waving movement of the user. As shown in the right part of FIG. 1, when the mobile terminal is used, if an inclination angle is excessively large and the mobile terminal is approximately in a landscape mode, the leftward and rightward waving may be detected as upward and downward waving. It can thus be seen that, if only data detected by the radar sensor is adopted for recognition in a process of recognizing a gesture through the mobile terminal, an error may occur to a great extent.

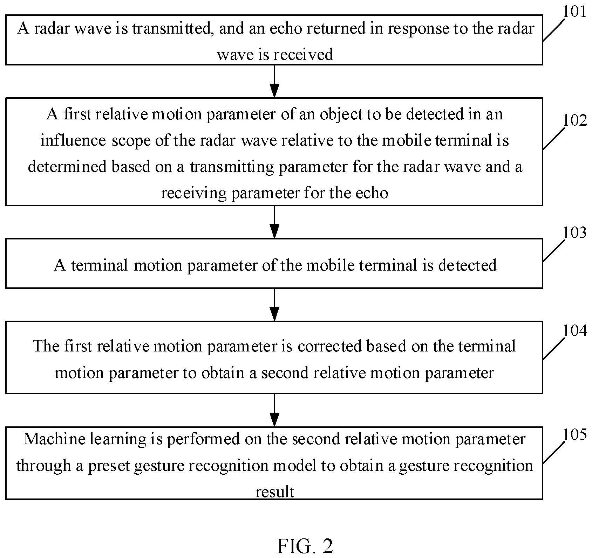

For obtaining a relative motion parameter of an object to be detected to a mobile terminal more accurately to implement gesture recognition, the embodiments of the present disclosure provide a method for gesture detection, which is applicable to a mobile terminal. FIG. 2 is a first flowchart showing a method for gesture detection according to an embodiment. As shown in FIG. 2, the method includes the following operations.

In Operation 101, a radar wave is transmitted, and an echo returned in response to the radar wave is received.

In Operation 102, a first relative motion parameter of an object to be detected in an influence scope of the radar wave relative to the mobile terminal is determined based on a transmitting parameter for the radar wave and a receiving parameter for the echo.

In Operation 103, a terminal motion parameter of the mobile terminal is detected.

In Operation 104, the first relative motion parameter is corrected based on the terminal motion parameter to obtain a second relative motion parameter.

In Operation 105, machine learning is performed on the second relative motion parameter through a preset gesture recognition model to obtain a gesture recognition result.

It is to be noted that the mobile terminal refers to any mobile electronic device, including a smart phone, a tablet computer, a notebook computer or a smart watch.

A radar sensor is mounted in the mobile terminal. The radar sensor may include a transmitting antenna and a receiving antenna. The receiving antenna and the transmitting antenna may form a radar antenna array and are configured to transmit the radar wave and receive the echo returned based on the radar wave. Specifically, a motion condition of the object to be detected in the influence scope of the radar wave may be detected through a transmitting parameter for the radar wave transmitted by the transmitting antenna and the echo received by the receiving antenna and returned in response to the radar wave.

In the embodiments of the present disclosure, the object to be detected may be an object for making a gesture, such as a palm or a finger.

A gesture may be for non-contact unlocking of the mobile terminal. A gesture may execute some control operations, for example, a leftward or rightward sliding gesture may be for page switching. Or, a gesture may implement a fruit slicing operation in a fruit slicing game.

The radar sensor may be arranged on a surface where a display screen of the mobile terminal is located, or on a surface opposite to the surface where the display screen is located, i.e., a back surface of the mobile terminal, or arranged on an end face (i.e., lateral surface) of the display screen.

It is to be noted that, when the radar sensor is on the surface where the display screen is located, a small area of the display screen may be occupied and more application requirements can be met. When the radar sensor is on the surface opposite to the surface where the display screen is located, no area of the display screen may be occupied, but fewer application requirements can be met. When the radar sensor is on the end face (i.e., the lateral surface) of the display screen, no area of the display screen is occupied, and a larger scope may be covered compared with that covered when the radar sensor is on the back surface. Therefore, a mounting position of the radar sensor may be set according to an actual requirement.

In the embodiments, since the mobile terminal is also in a moving state when detecting is conducted for the object to be detected, detecting the motion condition of the object to be detected in the influence scope of the radar wave specifically refers to detecting the first relative motion parameter of the object to be detected in the influence scope of the radar wave relative to the mobile terminal by transmitting the radar wave.

The first relative motion parameter refers to a relative motion parameter detected through the radar sensor during motion of the object to be detected relative to the mobile terminal.

In some embodiments, the first relative motion parameter may include a relative speed, and/or a relative angle and/or a relative distance.

The relative speed refers to a speed detected during the motion of the object to be detected relative to the mobile terminal. The relative angle refers to an angle detected during the motion of the object to be detected relative to the mobile terminal. Both the relative speed and the relative angle are values acquired during the motion of the object to be detected relative to the mobile terminal rather than values acquired during the motion of the object to be detected relative to the ground. The relative distance is a distance, detected during the motion of the object to be detected relative to the mobile terminal, between the object to be detected and the mobile terminal.

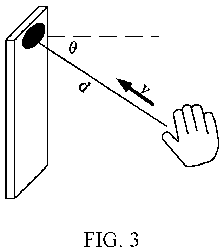

FIG. 3 is a schematic diagram illustrating a first relative motion parameter of a palm relative to a mobile terminal according to an exemplary embodiment. The first relative motion parameter of the palm relative to the mobile terminal in FIG. 3 includes a relative speed v, a relative angle θ and a relative distance d.

During the actual application, a relative motion parameter of the object to be detected relative to the mobile terminal is obtained, and another relative motion parameter of the object to be detected relative to the ground may also be obtained. The first relative motion parameter relative to the mobile terminal may be detected, and a third relative motion parameter relative to the ground is detected. For all moving objects, the ground is stationary. Therefore, in the present disclosure, the third relative motion parameter, detected relative to the ground, of the object to be detected may also be called an actual motion parameter of the object to be detected. The actual motion parameter of the object to be detected includes an actual speed and/or an actual angle.

The terminal motion parameter of the mobile terminal refers to various parameters representing a motion state of the mobile terminal during a motion relative to the ground. The terminal motion parameter of the mobile terminal is a motion parameter detected relative to the ground and thus is also considered as an actual motion parameter of the mobile terminal.

In the embodiments, the terminal motion parameter of the mobile terminal includes an attitude parameter, and may further include a movement acceleration and/or a rotation angular speed.

The attitude parameter represents a placement state of the mobile terminal, including placement in a landscape mode or placement in a portrait mode. The movement acceleration refers to an acceleration during movement of the mobile terminal relative to the ground, i.e., an actual motion acceleration of the mobile terminal. An integral operation may be executed on the movement acceleration to obtain the movement speed or the movement distance. Specifically, a single integral operation may be performed on the movement acceleration to obtain the movement speed. A double integral operation may be performed on the movement acceleration to obtain the movement distance. Both the movement speed and the movement distance refer to motion values of the mobile terminal relative to the ground.

The rotation angular speed refers to an angular speed detected during rotation of the mobile terminal relative to the ground, i.e., an actual rotation angular speed of the mobile terminal.

When the object to be detected and the mobile terminal move in the same direction, the relative speed in the first relative motion parameter may include a difference between the actual speed of the object to be detected and the movement speed of the mobile terminal.

It is to be noted that, if the mobile terminal transmits the radar wave when being in a stationary state and vertical to the ground, the first relative motion parameter detected based on the radar wave refers to the actual motion parameter of the object to be detected relative to the ground. In such case, all the movement acceleration, rotation angular speed and the like in the terminal motion parameter of the mobile terminal are 0. Since the terminal motion parameter has no interference to the first relative motion parameter, it is unnecessary to correct the first relative motion parameter based on the terminal motion parameter. Therefore, motion detection of the object to be detected in the embodiments of the present disclosure is detection of the object to be detected by the mobile terminal in the motion state.

Since the first relative motion parameter, determined by the mobile terminal in the motion state in the manner of transmitting the radar wave, of the motion of the object to be detected relative to the mobile terminal may not reflect an actual motion state of the object to be detected, detection is conducted for the terminal motion parameter of the mobile terminal the embodiments of the present disclosure. The first relative motion parameter is corrected based on the terminal motion parameter to obtain the second relative motion parameter.

The second relative motion parameter refers to a relative motion parameter obtained by correction and specifically refers to a motion parameter reflecting the actual motion state of the object to be detected. The operation that the first relative motion parameter is corrected based on the terminal motion parameter may include that: the terminal motion parameter is added or subtracted based on the first relative motion parameter.

For example, in a situation that the object to be detected does not move but the mobile terminal shakes leftwards and rightwards, the first relative motion parameter, detected in such case, of the object to be detected is actually the terminal motion parameter of the mobile terminal. Since the object to be detected does not move, both the actual movement speed and rotation angle of the object to be detected are 0. For obtaining the second relative motion parameter, subtraction may be performed on the first relative motion parameter and the terminal motion parameter.

For another example, in a situation that the object to be detected moves to direction A and the mobile terminal also swings to the direction A, when the movement speed of the object to be detected is the same as a swinging speed of the mobile terminal, both the relative speed and relative angle in the detected first relative motion parameter of the object to be detected are 0, namely it is determined that the object to be detected is stationary relative to the mobile terminal. However, if the object to be detected actually is moving, there is a motion generated at this moment. The movement acceleration and rotation angular speed in the detected terminal motion parameter are a movement acceleration and rotation angular speed of the object to be detected. In such case, the first relative motion parameter and the terminal motion parameter are needed to be added to obtain the second relative motion parameter.

For another example, in a situation that the object to be detected moves to direction A and the mobile terminal swings to direction B, the directions A and B being opposite, the relative speed in the first relative motion parameter, detected in such case, of the object to be detected is a sum of the actual movement speed of the object to be detected and the movement speed in the terminal motion parameter. In such case, it is necessary to perform subtraction on the first relative motion parameter and the terminal motion parameter to obtain the second relative motion parameter.

The movement direction of the mobile terminal may include a direction that the display screen faces, a direction vertical to the direction that the display screen faces, or another direction. In case of movement to the direction that the display screen faces, it may be determined that the mobile terminal moves forwards and backwards. In case of movement to the direction vertical to the direction that the display screen faces, it may be determined that the mobile terminal moves leftwards and rightwards. Another direction may be a direction other than forward-backward movement and leftward-rightward movement.

However, it is to be noted that the relative distance, the relative speed and the relative angle may exist for the mobile terminal and the object to be detected regardless of the movement direction. When the first relative motion parameter is corrected, the terminal motion parameter of the mobile terminal may be decomposed to directions the same as and vertical to the movement direction of the object to be detected based on the movement direction of the object to be detected to correct the first relative motion parameter.

In some examples, not being part of the invention, the gesture recognition model may be a model pretrained to recognize a dynamic pose of the object to be detected in preset time.

The gesture recognition model may be any neural network model capable of implementing prediction, for example, a Convolutional Neural Network (CNN) or a Long Short-Term Memory (LSTM) model.

The operation that the gesture recognition model is determined may include that: after a neural network model is selected, the neural network model is trained according to experimental data to obtain the gesture recognition model. The experimental data may include relative motion parameters and gesture recognition results corresponding to the relative motion parameters. The gesture recognition result may be represented by a percentage, i.e., similarities between the relative motion parameter and motion parameters of various gestures. The gesture with the maximum similarity is selected as a finally recognized gesture.

After the gesture recognition model is trained, the second relative motion parameter obtained by correction is input to the gesture recognition model to obtain the gesture recognition result.

In such a manner, based on the first relative motion parameter, detected based on the radar wave, of the object to be detected and considering the impact of a motion of the mobile terminal on the first relative motion parameter, the first relative motion parameter is corrected based on the detected terminal motion parameter to obtain a parameter of relative motion of the object to be detected to the mobile terminal more accurately. After the more accurate relative motion parameter is obtained, a more accurate second relative motion parameter is processed by machine learning through the preset gesture recognition model, so that the gesture recognition result is more accurate.

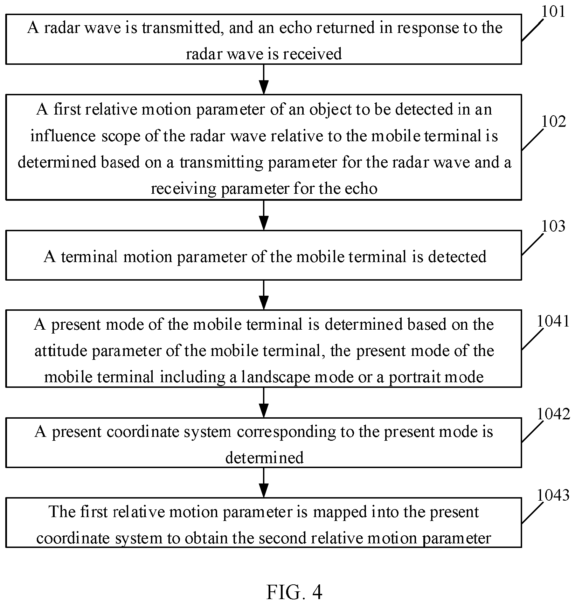

FIG. 4 is a second flowchart showing a method for gesture detection according to an embodiment. As shown in FIG. 4, the operation 104 that the first relative motion parameter is corrected based on the terminal motion parameter to obtain the second relative motion parameter includes the following operations.

In Operation 1041, a present mode of the mobile terminal is determined based on the attitude parameter of the mobile terminal, the present mode of the mobile terminal including a landscape mode or a portrait mode.

In Operation 1042, a present coordinate system corresponding to the present mode is determined.

In Operation 1043, the first relative motion parameter is mapped into the present coordinate system to obtain the second relative motion parameter.

The attitude parameter of the mobile terminal represents an attitude of a body of the mobile terminal. The attitude of the body of the mobile terminal is a landscape attitude or a portrait attitude. The attitude of the body of the mobile terminal may also be taken as an attitude of the display screen. When the attitude of the body of the mobile terminal is the landscape attitude, a corresponding present mode of the mobile terminal is the landscape mode. When the attitude of the body of the mobile terminal is the portrait attitude, the corresponding present mode of the mobile terminal is the portrait mode.

The attitude parameter may be acquired through an inertial sensor mounted in the mobile terminal. The inertial sensor may include a gravity sensor, an acceleration sensor or a gyroscope.

In the invention, the attitude parameter may be detected with reference to a gravity direction. For example, an included angle between a centerline of the mobile terminal and a present gravity direction may be detected. For detecting an attitude change of the display screen, the gravity sensor may be adopted for detection. When the present mode of the mobile terminal is changed from the landscape mode to the portrait mode or changed from the portrait mode to the landscape mode, a gravity direction of a gravity block in the gravity sensor changes, and then a force of the gravity block on a piezoelectric crystal also changes, so that it is detected that the attitude of the body of the mobile terminal changes.

Therefore, the operation that the present mode of the mobile terminal is determined based on the attitude parameter of the mobile terminal may be implemented as follows: the attitude of the display screen of the mobile terminal is determined based on a magnitude and direction, detected by the gravity sensor, of the force on the piezoelectric crystal; and the present mode of the mobile terminal is determined based on the attitude of the display screen.

The present coordinate system corresponding to the present mode includes a coordinate system in the landscape mode or a coordinate system in the portrait mode. The coordinate system in the landscape mode may be obtained by rotating the coordinate system in the portrait mode 90 degrees, namely changing a horizontal ordinate and a vertical ordinate.

Mapping the first relative motion parameter into the present coordinate system refers to mapping the first relative motion parameter into the coordinate system in the corresponding landscape mode or the coordinate system in the portrait mode. For example, if it is detected that the display screen of the mobile terminal is changed to the portrait mode, the first relative motion parameter represented by the coordinate system in the landscape mode is mapped into the coordinate system in the portrait mode to obtain the second relative motion parameter.

When the motion state of the object to be detected is detected, if the attitude of the display screen is changed, the coordinate system representing the relative motion parameter is also changed correspondingly. In such a manner, misjudgments in the detected movement direction of the object to be detected due to changes of the attitude of the display screen can be reduced, and a correct relative motion parameter can be further obtained by correction.

In some embodiments, the method may further include that:
a movement speed and/or movement distance of the mobile terminal are/is determined according to the movement acceleration of the mobile terminal; and
a rotation angle of the mobile terminal is determined according to the rotation angular speed of the mobile terminal.

The movement acceleration of the mobile terminal may be directly detected through the inertial sensor. Since a ratio of the movement speed to movement time is the movement acceleration, the single integral operation may be performed on the movement acceleration to calculate the movement speed.

Correspondingly, since the movement distance is directly proportional to a square of the movement acceleration, the double integral operation may be performed on the movement acceleration to calculate the movement distance.

Similarly, the rotation angular speed of the mobile terminal may also be directly detected through the inertial sensor. Since the rotation angular speed is a ratio of the rotation angle to rotation time, the single integral operation may be executed on the detected rotation angular speed to obtain the rotation angle.

In some embodiments, the operation 104 that the first relative motion parameter is corrected based on the terminal motion parameter to obtain the second relative motion parameter may include at least one of following:
the relative speed is corrected according to the movement speed of the mobile terminal to determine the second relative motion parameter;
the relative distance is corrected according to the movement distance of the mobile terminal to determine the second relative motion parameter; and
the relative angle is corrected according to the rotation angle of the mobile terminal to determine the second relative motion parameter.

As mentioned above, the movement speed refers to the movement speed of the mobile terminal relative to the ground, i.e., the actual movement speed of the mobile terminal.

The operation that the relative speed is corrected according to the movement speed of the mobile terminal to determine the second relative motion parameter may include that: the second relative motion parameter is determined according to subtraction or addition of the movement speed of the mobile terminal and the relative speed.

Subtraction or addition of the movement speed of the mobile terminal and the relative speed may be determined based on a specific condition, namely:
determining whether a translation direction of the mobile terminal is opposite to or the same as the movement direction of the object to be detected;
when the translation direction of the mobile terminal is opposite to the movement direction of the object to be detected, performing subtraction on a numerical value of the movement speed of the mobile terminal and a numerical value of the relative speed to determine the second relative motion parameter; or
when the translation direction of the mobile terminal is the same as the movement direction of the object to be detected, adding the numerical value corresponding to the movement speed of the mobile terminal and the numerical value corresponding to the relative speed to determine the second relative motion parameter.

When the translation direction of the mobile terminal is opposite to the movement direction of the object to be detected, the relative speed in the detected first relative motion parameter is a sum of the numerical value corresponding to the movement speed of the mobile terminal in the direction opposite to the translation direction of the mobile terminal and a numerical value corresponding to the actual speed of the object to be detected. In such case, for obtaining the second relative motion parameter, i.e., the actual speed, it is needed to subtract the numerical value corresponding to the movement speed of the mobile terminal from the numerical value corresponding to the relative speed.

When the translation direction of the mobile terminal is the same as the movement direction of the object to be detected, the relative speed in the detected first relative motion parameter is a difference of the numerical value corresponding to the movement speed of the mobile terminal and the numerical value corresponding to the actual speed of the object to be detected. In such case, for obtaining the second relative motion parameter, it is necessary to add the numerical value corresponding to the relative speed and the numerical value corresponding to the movement speed of the mobile terminal.

The translation direction of the mobile terminal and the movement direction of the object to be detected may further include the following condition: the translation direction of the mobile terminal forms a certain included angle with the movement direction of the object to be detected. Existence of the certain included angle means that the translation direction of the mobile terminal and the movement direction of the object to be detected are vertical or have a non-vertical included angle.

That the translation direction of the mobile terminal and the movement direction of the object to be detected are vertical refers to the mobile terminal moving leftwards and rightwards but the object to be detected moves forwards and backwards. In such case, a detected speed of the object to be detected in a left-right direction is 0, namely the first relative motion parameter detected in the left-right direction is the same as the movement speed of the mobile terminal, and subtraction is performed on the movement speed of the mobile terminal and the relative speed in the first relative motion parameter to determine the second relative motion parameter in the left-right direction.

In the condition that the translation direction of the mobile terminal and the movement direction of the object to be detected form a non-vertical included angle, the relative speed in the direction of the non-vertical included angle may be decomposed to a first speed in a direction parallel to the translation direction of the mobile terminal and a second speed in the direction vertical to the translation direction of the mobile terminal. When the first speed is the same as the translation direction of the mobile terminal, the movement speed of the mobile terminal and the first speed obtained by decomposing the relative speed are added to determine the second relative motion parameter.

It is to be noted that correcting the relative speed according to the movement speed of the mobile terminal refers to performing correction based on the movement speed when a state of the display screen of the mobile terminal does not change. When the state of the display screen of the mobile terminal changes, subtraction or addition may be performed on the movement speed of the mobile terminal and the relative speed to determine the second relative motion parameter after the coordinate system representing the relative motion parameter is correspondingly changed.

Similarly, the operation that the relative distance is corrected according to the movement distance of the mobile terminal to determine the second relative motion parameter may include that: the second relative motion parameter is determined based on subtraction or addition of the movement distance of the mobile terminal and the relative distance.

Subtraction or addition of the movement distance of the mobile terminal and the relative distance may be determined based on a specific condition, namely:
determining whether the translation direction of the mobile terminal is opposite to or the same as the movement direction of the object to be detected;
when the translation direction of the mobile terminal is opposite to the movement direction of the object to be detected, performing subtraction on a numerical value corresponding to the movement distance of the mobile terminal and a numerical value corresponding to the relative distance to determine the second relative motion parameter; and
when the translation direction of the mobile terminal is the same as the movement direction of the object to be detected, adding the numerical value corresponding to the movement distance of the mobile terminal and the numerical value corresponding to the relative distance to determine the second relative motion parameter.

The translation direction of the mobile terminal and the movement direction of the object to be detected may further include the following condition: the translation direction of the mobile terminal forms a certain included angle with the movement direction of the object to be detected. When there is a movement included angle, the movement distance of the mobile terminal is decomposed to a first movement distance in the direction the same as the movement direction of the object to be detected and a second movement distance in the direction vertical to it. Since the first movement distance is the same as the movement direction of the object to be detected, the second relative motion parameter may be determined by processing based on the first movement distance based on the corresponding processing condition when the translation direction of the mobile terminal is the same as the movement direction of the object to be detected.

Based on this, the operation that the relative angle is corrected according to the rotation angle of the mobile terminal to determine the second relative motion parameter may include that:
subtraction or addition is performed on the rotation angle and the relative angle to determine the second relative motion parameter.

Subtraction or addition of the rotation angle and the relative angle may be determined based on a specific condition, namely:
determining whether a rotation direction of the mobile terminal is opposite to or the same as a rotation direction of the object to be detected;
when the rotation direction of the mobile terminal is opposite to the rotation direction of the object to be detected, performing subtraction on the rotation angle of the mobile terminal and the relative angle to determine the second relative motion parameter; and
when the rotation direction of the mobile terminal is the same as the rotation direction of the object to be detected, adding the rotation angle of the mobile terminal and the relative angle to determine the second relative motion parameter.

When the rotation direction of the mobile terminal is opposite to the rotation direction of the object to be detected, the relative angle in the detected first relative motion parameter is a difference between the rotation angle of the mobile terminal and the actual angle of the object to be detected. In such case, for obtaining the second relative motion parameter, it is needed to subtract the rotation angle of the mobile terminal from the relative angle.

Therefore, a more accurate relative motion parameter may be obtained by correcting the relative speed according to the movement speed of the mobile terminal, correcting the relative angle according to the rotation angle of the mobile terminal and/or correcting the relative distance according to the movement distance of the mobile terminal to lay a foundation for subsequent motion pose recognition implemented based on the relative motion parameter.

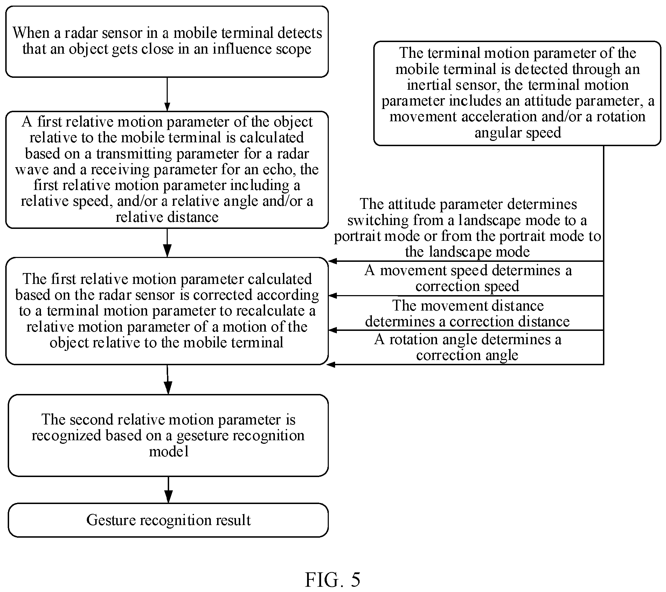

FIG. 5 is a third flowchart showing a method for gesture detection according to an exemplary embodiment. The method for gesture detection in the embodiment of the present disclosure may be as follows: when a radar sensor in a mobile terminal detects that an object gets close in an influence scope, a first relative motion parameter of the object relative to the mobile terminal is calculated based on a transmitting parameter for a radar wave and a receiving parameter for an echo. The first relative motion parameter may include a relative speed, and/or a relative angle and/or a relative distance.

Meanwhile, a terminal motion parameter of the mobile terminal is detected through an inertial sensor. The terminal motion parameter includes an attitude parameter, and may further include a movement acceleration and/or a rotation angular speed. It may be determined based on the attitude parameter that a screen of the mobile terminal is changed from a landscape mode to a portrait mode or from the portrait mode to the landscape mode. A correction speed for the first relative motion parameter may be determined through a movement speed calculated according to the movement acceleration. A correction distance for the first relative motion parameter may be determined through a movement distance calculated according to the movement acceleration. A correction angle for the first relative motion parameter may be determined through a rotation angle calculated according to the rotation angular speed. The first relative motion parameter calculated based on the radar sensor is further corrected based on the terminal motion parameter to recalculate a relative motion parameter (second relative motion parameter) of the object relative to the mobile terminal. The second relative motion parameter is finally recognized based on a gesture recognition model to obtain a gesture recognition result.

Accordingly, after the radar wave is transmitted to determine the first relative motion parameter of the object to be detected relative to the mobile terminal, the terminal motion parameter of the mobile terminal is further detected, and the first relative motion parameter is corrected based on the terminal motion parameter to obtain the second relative motion parameter of the object to be detected. Data acquisition inaccuracy caused when the mobile terminal is not fixed or there is an inclination angle in the landscape or portrait mode can be effectively solved. Correction based on the terminal motion parameter may keep accurate detection over the motion parameter of the object to be detected to further obtain a more accurate gesture recognition result by recognition based on the corrected motion parameter and the gesture recognition model.

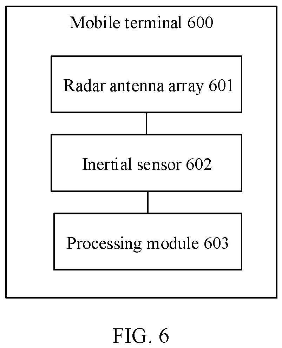

For obtaining a relative motion of an object to be detected and a mobile terminal more accurately, the embodiments of the present disclosure provide a mobile terminal. FIG. 6 is a structure block diagram of a mobile terminal according to an embodiment. As shown in FIG. 6, the mobile terminal 600 includes:
a radar antenna array 601, configured to transmit a radar wave and receive an echo returned in response to the radar wave;
an inertial sensor 602, configured to detect a terminal motion parameter of the mobile terminal; and
a processing module 603, connected with the radar antenna array and the inertial sensor and configured to determine a first relative motion parameter of an object to be detected in an influence scope of the radar wave relative to the mobile terminal based on a transmitting parameter for the radar wave and a receiving parameter for the echo, correct the first relative motion parameter based on the terminal motion parameter to obtain a second relative motion parameter and perform machine learning on the second relative motion parameter through a preset gesture recognition model to obtain a gesture recognition result.

The terminal motion parameter includes an attitude parameter, and may further include a movement acceleration and/or a rotation angular speed. The first relative motion parameter may include at least one of a relative speed, a relative angle and a relative distance.

In some embodiments, the processing module is specifically configured to:
determine a present mode of the mobile terminal based on the attitude parameter of the mobile terminal, the present mode of the mobile terminal including a landscape mode or a portrait mode;
determine a present coordinate system corresponding to the present mode; and
map the first relative motion parameter into the present coordinate system to obtain the second relative motion parameter.

In some embodiments, the processing module is further specifically configured to:
determine a movement speed and/or movement distance of the mobile terminal according to the movement acceleration, detected by the inertial sensor, of the mobile terminal and
determine a rotation angle of the mobile terminal according to the rotation angular speed, detected by the inertial sensor, of the mobile terminal.

The processing module is further specifically configured to implement at least one of following:
correcting the relative speed according to the movement speed of the mobile terminal to determine the second relative motion parameter,
correcting the relative distance according to the movement distance of the mobile terminal to determine the second relative motion parameter, and
correcting the relative angle according to the rotation angle of the mobile terminal to determine the second relative motion parameter.

With respect to the module in the above embodiment, specific modes have been described in detail in the embodiment regarding the method, which will not be elaborated herein.

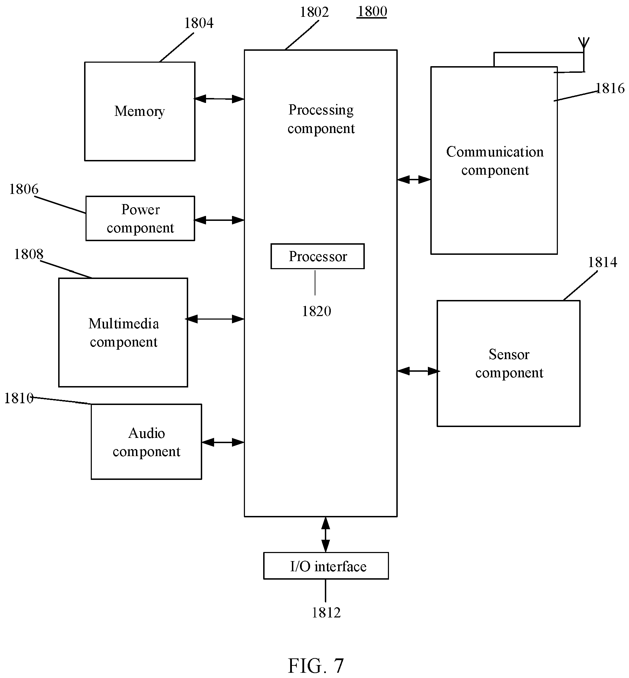

FIG. 7 is a block diagram of a device 1800 for gesture detection according to an exemplary embodiment. For example, the device 1800 may be a mobile phone, a computer, a digital broadcast terminal, a messaging device, a gaming console, a tablet, a medical device, exercise equipment, a personal digital assistant and the like.

Referring to FIG. 7, the device 1800 may include one or more of the following components: a processing component 1802, memory 1804, a power component 1806, a multimedia component 1808, an audio component 1810, an Input/Output (I/O) interface 1812, a sensor component 1814, and a communication component 1816.

The processing component 1802 typically controls overall operations of the device 1800, such as the operations associated with display, telephone calls, data communications, camera operations, and recording operations. The processing component 1802 may include one or more processors 1820 to execute instructions to perform all or part of the operations in the abovementioned method. Moreover, the processing component 1802 may further include one or more modules which facilitate interaction between the processing component 1802 and the other components. For instance, the processing component 1802 may include a multimedia module to facilitate interaction between the multimedia component 1808 and the processing component 1802.

The memory 1804 is configured to store various types of data to support the operation of the device 1800. Examples of such data include instructions for any applications or methods operated on the device 1800, contact data, phonebook data, messages, pictures, video, etc. The memory 1804 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 1806 is configured to provide power for various components of the device 1800. The power component 1806 may include a power management system, one or more power supplies, and other components associated with generation, management and distribution of power for the device 1800.

The multimedia component 1808 may include a screen providing an output interface between the device 1800 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action but also detect a duration and pressure associated with the touch or swipe action. In some embodiments, the multimedia component 1808 includes a front camera and/or a rear camera. The front camera and/or the rear camera may receive external multimedia data when the device 1800 is in an operation mode, such as a photographing mode or a video mode. Each of the front camera and/or the rear camera may be a fixed optical lens system or have focusing and optical zooming capabilities.

The audio component 1810 is configured to output and/or input an audio signal. For example, the audio component 1810 includes a Microphone (MIC), and the MIC is configured to receive an external audio signal when the device 1800 is in the operation mode, such as a call mode, a recording mode and a voice recognition mode. The received audio signal may further be stored in the memory 1804 or sent through the communication component 1816. In some embodiments, the audio component 1810 further includes a speaker configured to output the audio signal.

The I/O interface 1812 is configured to provide an interface between the processing component 1802 and a peripheral interface module, and the peripheral interface module may be a keyboard, a click wheel, a button and the like. The button may include, but not limited to: a home button, a volume button, a starting button and a locking button.

The sensor component 1814 may include one or more sensors configured to provide status assessment in various aspects for the device 1800. For instance, the sensor component 1814 may detect an on/off status of the device 1800 and relative positioning of components, such as a display and small keyboard of the device 1800, and the sensor component 1814 may further detect a change in a position of the device 1800 or a component of the device 1800, presence or absence of contact between the user and the device 1800, orientation or acceleration/deceleration of the device 1800 and a change in temperature of the device 1800. The sensor component 1814 may include a proximity sensor configured to detect presence of an object nearby without any physical contact. The sensor component 1814 may also include a light sensor, such as a Complementary Metal Oxide Semiconductor (CMOS) or Charge Coupled Device (CCD) image sensor, configured for use in an imaging application. In some embodiments, the sensor component 1814 may also include an acceleration sensor, a gyroscope sensor, a magnetic sensor, a pressure sensor or a temperature sensor.

The communication component 1816 is configured to facilitate wired or wireless communication between the device 1800 and another device. The device 1800 may access a communication-standard-based wireless network, such as a Wireless Fidelity (WiFi) network, a 2nd-Generation (2G) or 3rd-Generation (3G) network or a combination thereof. In an exemplary embodiment, the communication component 1816 receives a broadcast signal or broadcast associated information from an external broadcast management system through a broadcast channel. In an exemplary embodiment, the communication component 1816 further includes a Near Field Communication (NFC) module to facilitate short-range communication. For example, the NFC module may be implemented based on a Radio Frequency Identification (RFID) technology, an Infrared Data Association (IrDA) technology, an Ultra-WideBand (UWB) technology, a Bluetooth (BT) technology or another technology.

In an exemplary embodiment, the device 1800 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an embodiment, there is also provided a non-transitory computer-readable storage medium storing instructions, such as the memory 1804 storing instructions, and the instructions are executed by the processor 1820 of the device 1800 to implement the abovementioned method. For example, the non-transitory computer-readable storage medium may be a ROM, a Random Access Memory (RAM), a Compact Disc Read-Only Memory (CD-ROM), a magnetic tape, a floppy disc, an optical data storage device and the like.

According to a non-transitory computer-readable storage medium, an instruction in the storage medium is executable by a processor of a device for gesture detection to cause the device for gesture detection to implement the method for gesture detection.

The terms used in the present disclosure are for describing particular embodiments only, and are not intended to limit the present disclosure. The singular forms "a/an", "the" and "this" used in the present disclosure and the appended claims are also intended to include the plural forms unless the context clearly indicates other meanings. It is to be understood that the term "and/or" as used herein refers to and includes any or all possible combinations of one or more associated listed items.

It is to be understood that although the terms first, second, third, etc. may be used to describe various information in the present disclosure, the information should not be limited to these terms. The terms are only used to distinguish the same type of information from each other. For example, without departing from the scope of the present disclosure, the first information may also be referred to as second information, and similarly, the second information may also be referred to as first information. Depending on the context, the word "if" as used herein may be interpreted as "during" or "when" or "in response to determination".

Other implementation solutions of the present disclosure will be apparent to those skilled in the art from consideration of the specification and practice of the present disclosure. It is intended that the specification and examples be considered as exemplary only, with the scope of the invention being defined by the appended claims.

It will be appreciated that the present disclosure is not limited to the exact construction that has been described above and illustrated in the accompanying drawings, and that various modifications and changes may be made without departing from the scope of the invention which is defined by the appended claims.

## Claims

1. A method for gesture detection, applicable to a mobile terminal and comprising:
transmitting (101) a radar wave;
receiving (101) an echo returned in response to the radar wave;
determining (102) a first relative motion parameter of an object to be detected in an influence scope of the radar wave relative to the mobile terminal based on a transmitting parameter for the radar wave and a receiving parameter for the echo;
detecting (103) a terminal motion parameter of the mobile terminal;
correcting the first relative motion parameter based on the terminal motion parameter to obtain a second relative motion parameter; and
performing machine learning (105) on the second relative motion parameter through a preset gesture recognition model to obtain a gesture recognition result, **characterized in that** the terminal motion parameter comprises an attitude parameter, and correcting the first relative motion parameter based on the terminal motion parameter to obtain the second relative motion parameter comprises:
determining (1041) a present mode of the mobile terminal based on the attitude parameter of the mobile terminal, wherein the present mode of the mobile terminal comprises a landscape mode or a portrait mode;
determining (1042) a present coordinate system corresponding to the present mode; and
mapping (1043) the first relative motion parameter into the present coordinate system to obtain the second relative motion parameter.

2. The method of claim 1, wherein
the terminal motion parameter further comprises at least one of a movement acceleration and a rotation angular speed; and
the first relative motion parameter comprises at least one of a relative speed, a relative angle and a relative distance.

3. The method of claim 2, further comprising:
determining a movement speed and/or movement distance of the mobile terminal according to the movement acceleration of the mobile terminal; and
determining a rotation angle of the mobile terminal according to the rotation angular speed of the mobile terminal;
and, correcting the first relative motion parameter based on the terminal motion parameter to obtain the second relative motion parameter further comprises at least one of:
correcting the relative speed according to the movement speed of the mobile terminal to determine the second relative motion parameter;
correcting the relative distance according to the movement distance of the mobile terminal to determine the second relative motion parameter; and
correcting the relative angle according to the rotation angle of the mobile terminal to determine the second relative motion parameter.

4. A mobile terminal (600), comprising:
a radar antenna array (601), configured to transmit a radar wave and receive an echo returned in response to the radar wave;
an inertial sensor (602), configured to detect a terminal motion parameter of the mobile terminal; and
a processing module (603), connected with the radar antenna array and the inertial sensor, configured to determine a first relative motion parameter of an object to be detected in an influence scope of the radar wave relative to the mobile terminal based on a transmitting parameter for the radar wave and a receiving parameter for the echo, correct the first relative motion parameter based on the terminal motion parameter to obtain a second relative motion parameter and perform machine learning on the second relative motion parameter through a preset gesture recognition model to obtain a gesture recognition result, **characterized in that** the terminal motion parameter comprises an attitude parameter, and the processing module (603) is further configured to:
determine a present mode of the mobile terminal based on the attitude parameter of the mobile terminal, wherein the present mode of the mobile terminal comprises a landscape mode or a portrait mode;
determine a present coordinate system corresponding to the present mode; and
map the first relative motion parameter into the present coordinate system to obtain the second relative motion parameter.

5. The mobile terminal of claim 4, wherein
the terminal motion parameter further comprises at least one of a movement acceleration and a rotation angular speed; and
the first relative motion parameter comprises at least one of a relative speed, a relative angle and a relative distance.

6. The mobile terminal of claim 5, wherein the processing module (603) is configured to:
determine a movement speed and/or movement distance of the mobile terminal according to the movement acceleration, detected by the inertial sensor, of the mobile terminal and
determine a rotation angle of the mobile terminal according to the rotation angular speed, detected by the inertial sensor, of the mobile terminal;
and, the processing module is further specifically configured to implement at least one of following:
correcting the relative speed according to the movement speed of the mobile terminal to determine the second relative motion parameter,
correcting the relative distance according to the movement distance of the mobile terminal to determine the second relative motion parameter, and
correcting the relative angle according to the rotation angle of the mobile terminal to determine the second relative motion parameter.

7. A device for gesture detection (1800), comprising:
a processor (1820);
a radar antenna array (601), configured to transmit a radar wave and receive an echo returned in response to the radar wave;
an inertial sensor (602), configured to detect a terminal motion parameter of a mobile terminal; and
memory (1804) configured to store instructions executable by the processor,
wherein the processor is configured to run the executable instructions stored in the memory to implement operations of:
determining (102) a first relative motion parameter of an object to be detected in an influence scope of the radar wave relative to the mobile terminal based on a transmitting parameter for the radar wave and a receiving parameter for the echo;
correcting the first relative motion parameter based on the terminal motion parameter to obtain a second relative motion parameter; and
performing machine learning on the second relative motion parameter through a preset gesture recognition model to obtain a gesture recognition result, **characterized in that** the terminal motion parameter comprises an attitude parameter, and the processor, when running the executable instructions stored in the memory, is further configured to:
determine a present mode of the mobile terminal based on the attitude parameter of the mobile terminal, wherein the present mode of the mobile terminal comprises a landscape mode or a portrait mode;
determine a present coordinate system corresponding to the present mode; and
map the first relative motion parameter into the present coordinate system to obtain the second relative motion parameter.

8. The device of claim 7, wherein
the terminal motion parameter further comprises at least one of a movement acceleration and a rotation angular speed; and
the first relative motion parameter comprises at least one of a relative speed, a relative angle and a relative distance.

9. The device of claim 8, wherein the processor is further configured to run the executable instructions stored in the memory to implement operations of:
determining a movement speed and/or movement distance of the mobile terminal according to the movement acceleration of the mobile terminal; and
determining a rotation angle of the mobile terminal according to the rotation angular speed of the mobile terminal;
and, correcting the first relative motion parameter based on the terminal motion parameter to obtain the second relative motion parameter comprises at least one of:
correcting the relative speed according to the movement speed of the mobile terminal to determine the second relative motion parameter;
correcting the relative distance according to the movement distance of the mobile terminal to determine the second relative motion parameter; and
correcting the relative angle according to the rotation angle of the mobile terminal to determine the second relative motion parameter.

10. A non-transitory computer-readable storage medium, having stored instructions therein that, when executed by the processor (1820) of the device for gesture detection (1800) of any of claims 7 to 9, cause the processor (1820) to implement the operations as defined in these claims.

## Patentansprüche

1. Verfahren zur Gestenerkennung, anwendbar auf ein mobiles Endgerät und umfassend:
Aussenden (101) einer Radarwelle;
Empfang (101) eines Echos, das als Antwort auf die Radarwelle zurückkommt;
Bestimmen (102) eines ersten relativen Bewegungsparameters eines zu erfassenden Objekts in einem Einflussbereich der Radarwelle relativ zu dem mobilen Endgerät auf der Grundlage eines Sendeparameters für die Radarwelle und eines Empfangsparameters für das Echo;
Erfassen (103) eines Endgerätebewegungsparameters des mobilen Endgerätes;
Korrigieren des ersten Relativbewegungsparameters auf der Grundlage des Endgerätebewegungsparameters, um einen zweiten Relativbewegungsparameter zu erhalten; und
Durchführen von maschinellem Lernen (105) an dem zweiten Relativbewegungsparameter durch ein voreingestelltes Gestenerkennungsmodell, um ein Gestenerkennungsergebnis zu erhalten, **dadurch gekennzeichnet, dass** der Endgerätebewegungsparameter einen Lageparameter umfasst, und Korrigieren des ersten Relativbewegungsparameters auf der Grundlage des Endbewegungsparameters, um den zweiten Relativbewegungsparameter zu erhalten, umfasst:
Bestimmen (1041)eines aktuellen Modus des mobilen Endgeräts auf der Grundlage des Lageparameters des mobilen Endgeräts, wobei der aktuelle Modus des mobilen Endgeräts einen Querformatmodus oder einen Hochformatmodus umfasst;
Bestimmen (1042) eines aktuellen Koordinatensystems, das dem aktuellen Modus entspricht; und
Abbilden (1043) des ersten Relativbewegungsparameters in das aktuelle Koordinatensystem, um den zweiten Relativbewegungsparameter zu erhalten.

2. Das Verfahren nach Anspruch 1, wobei
der Endgerätebewegungsparameter außerdem mindestens eine Bewegungsbeschleunigung und eine Drehwinkelgeschwindigkeit umfasst; und
der erste Relativbewegungsparameter mindestens eine Relativgeschwindigkeit, einen Relativwinkel und einen Relativabstand umfasst.

3. Das Verfahren nach Anspruch 2 ferner umfassend:
Bestimmen einer Bewegungsgeschwindigkeit und/oder Bewegungsdistanz des mobilen Endgerätes entsprechend der Bewegungsbeschleunigung des mobilen Endgerätes; und
Bestimmung eines Drehwinkels des mobilen Endgerätes entsprechend der Drehwinkelgeschwindigkeit des mobilen Endgerätes;
und das Korrigieren des ersten Relativbewegungsparameters auf der Grundlage des Endbewegungsparameters, um den zweiten Relativbewegungsparameter zu erhalten, umfasst ferner mindestens eines der folgenden Elemente:
Korrigieren der Relativgeschwindigkeit entsprechend der Bewegungsgeschwindigkeit des mobilen Endgeräts, um den zweiten Relativbewegungsparameter zu bestimmen;
Korrigieren des relativen Abstands entsprechend dem Bewegungsabstand des mobilen Endgeräts, um den zweiten Relativbewegungsparameter zu bestimmen; und
Korrigieren des Relativwinkels entsprechend dem Drehwinkel des mobilen Endgeräts, um den zweiten Relativbewegungsparameter zu bestimmen.

4. Ein mobiles Endgerät (600), umfassend:
eine Radarantennengruppe (601), die so konfiguriert ist, dass sie eine Radarwelle sendet und ein Echo empfängt, das als Reaktion auf die Radarwelle zurückkommt;
einen Trägheitssensor (602), der so konfiguriert ist, dass er einen Endgerätebewegungsparameter des mobilen Endgeräts erfasst; und
ein Verarbeitungsmodul (603), das mit der Radarantennengruppe und dem Trägheitssensor verbunden ist und so konfiguriert ist, dass es einen ersten Relativbewegungsparameter eines zu erfassenden Objekts in einem Einflussbereich der Radarwelle relativ zu dem mobilen Endgerät auf der Grundlage eines Sendeparameters für die Radarwelle und eines Empfangsparameters für das Echo bestimmt, den ersten Relativbewegungsparameter auf der Grundlage des Endgerätebewegungsparameters zu korrigieren, um einen zweiten Relativbewegungsparameter zu erhalten, und maschinelles Lernen an dem zweiten Relativbewegungsparameter durch ein voreingestelltes Gestenerkennungsmodell durchzuführen, um ein Gestenerkennungsergebnis zu erhalten, **dadurch gekennzeichnet, dass** der Endgerätebewegungsparameter einen Lageparameter umfasst, und das Verarbeitungsmodul (603) ferner konfiguriert ist, zum:
Bestimmen eines aktuellen Modus des mobilen Endgeräts auf der Grundlage des Lageparameters des mobilen Endgeräts, wobei der aktuelle Modus des mobilen Endgeräts einen Querformatmodus oder einen Hochformatmodus umfasst;
Bestimmung eines aktuellen Koordinatensystems, das dem aktuellen Modus entspricht; und
Abbilden des ersten Relativbewegungsparameters in das aktuelle Koordinatensystem, um den zweiten Relativbewegungsparameter zu erhalten.

5. Das mobile Endgerät nach Anspruch 4, wobei
der Endgerätebewegungsparameter außerdem mindestens eine Bewegungsbeschleunigung und eine Drehwinkelgeschwindigkeit umfasst; und
der erste Relativbewegungsparameter mindestens eine Relativgeschwindigkeit, einen Relativwinkel und einen Relativabstand umfasst.

6. Das mobile Endgerät nach Anspruch 5, wobei das Verarbeitungsmodul (603) konfiguriert ist zum:
Bestimmen einer Bewegungsgeschwindigkeit und/oder einer Bewegungsdistanz des mobilen Endgeräts entsprechend der von dem Trägheitssensor erfassten Bewegungsbeschleunigung des mobilen Endgeräts und
Bestimmen eines Drehwinkels des mobilen Endgerätes entsprechend der vom Trägheitssensor erfassten Drehwinkelgeschwindigkeit des mobilen Endgerätes;
und, das Verarbeitungsmodul ferner speziell konfiguriert ist, um mindestens eines der folgenden zu implementieren:
Korrigieren der Relativgeschwindigkeit entsprechend der Bewegungsgeschwindigkeit des mobilen Endgeräts, um den zweiten Relativbewegungsparameter zu bestimmen,
Korrigieren des relativen Abstands entsprechend dem Bewegungsabstand des mobilen Endgeräts, um den zweiten Relativbewegungsparameter zu bestimmen, und
Korrigieren des Relativwinkels entsprechend dem Drehwinkel des mobilen Endgeräts, um den zweiten Relativbewegungsparameter zu bestimmen.

7. Eine Vorrichtung zur Gestenerkennung (1800), die Folgendes umfasst:
einen Prozessor (1820);
eine Radarantennengruppe (601), die so konfiguriert ist, dass sie eine Radarwelle sendet und ein Echo empfängt, das als Reaktion auf die Radarwelle zurückkommt;
einen Trägheitssensor (602), der so konfiguriert ist, dass er einen EndgeräteBewegungsparameter eines mobilen Endgerätes erfasst; und
Speicher (1804), der so konfiguriert ist, dass er vom Prozessor ausführbare Befehle speichert,
wobei der Prozessor so konfiguriert ist, dass er die im Speicher gespeicherten ausführbaren Anweisungen ausführt, um die folgenden Operationen zu implementieren:
Bestimmen (102) eines ersten Relativbewegungsparameters eines zu erfassenden Objekts in einem Einflussbereich der Radarwelle relativ zu dem mobilen Endgerät auf der Grundlage eines Sendeparameters für die Radarwelle und eines Empfangsparameters für das Echo;
Korrigieren des ersten Relativbewegungsparameters auf der Grundlage des Endbewegungsparameters, um einen zweiten Relativbewegungsparameter zu erhalten; und
Durchführen von maschinellem Lernen an dem zweiten relativen Bewegungsparameter durch ein voreingestelltes Gestenerkennungsmodell, um ein Gestenerkennungsergebnis zu erhalten, **dadurch gekennzeichnet, dass** der Endgerätebewegungsparameter einen Lageparameter umfasst, und der Prozessor, wenn er die im Speicher gespeicherten ausführbaren Anweisungen ausführt, ferner konfiguriert ist zum:
Bestimmen eines aktuellen Modus des mobilen Endgeräts auf der Grundlage des Lageparameters des mobilen Endgeräts, wobei der aktuelle Modus des mobilen Endgeräts einen Querformatmodus oder einen Hochformatmodus umfasst;
Bestimmung eines aktuellen Koordinatensystems, das dem aktuellen Modus entspricht; und
Abbilden des ersten Relativbewegungsparameters in das aktuelle Koordinatensystem, um den zweiten Relativbewegungsparameter zu erhalten.

8. Die Vorrichtung nach Anspruch 7, wobei
der Endgerätebewegungsparameter außerdem mindestens eine Bewegungsbeschleunigung und eine Drehwinkelgeschwindigkeit umfasst; und
der erste Relativbewegungsparameter mindestens eine Relativgeschwindigkeit, einen Relativwinkel und einen Relativabstand umfasst.

9. Vorrichtung nach Anspruch 8, wobei der Prozessor ferner so konfiguriert ist, dass er die im Speicher gespeicherten ausführbaren Anweisungen ausführt, um die folgenden Operationen zu implementieren:
Bestimmen einer Bewegungsgeschwindigkeit und/oder Bewegungsdistanz des mobilen Endgerätes entsprechend der Bewegungsbeschleunigung des mobilen Endgerätes; und
Bestimmung eines Drehwinkels des mobilen Endgerätes entsprechend der Drehwinkelgeschwindigkeit des mobilen Endgerätes;
und das Korrigieren des ersten Relativbewegungsparameters auf der Grundlage des Endbewegungsparameters, um den zweiten Relativbewegungsparameter zu erhalten, umfasst mindestens eines der folgenden Elemente:
Korrigieren der Relativgeschwindigkeit entsprechend der Bewegungsgeschwindigkeit des mobilen Endgeräts, um den zweiten Relativbewegungsparameter zu bestimmen;
Korrigieren des relativen Abstands entsprechend dem Bewegungsabstand des mobilen Endgeräts, um den zweiten Relativbewegungsparameter zu bestimmen; und
Korrigieren des Relativwinkels entsprechend dem Drehwinkel des mobilen Endgeräts, um den zweiten Relativbewegungsparameter zu bestimmen.

10. Nicht-transitorisches computerlesbares Speichermedium mit darin gespeicherten Befehlen, die, wenn sie vom Prozessor (1820) der Vorrichtung zur Gestenerkennung (1800) nach einem der Ansprüche 7 bis 9 ausgeführt werden, den Prozessor (1820) veranlassen, die in diesen Ansprüchen definierten Operationen durchzuführen.

## Revendications

1. Méthode de détection des gestes, applicable à un terminal mobile et comprenant :
transmettre (101) une onde radar ;
recevoir (101) un écho renvoyé en réponse à l'onde radar ;
déterminer (102) un premier paramètre de mouvement relatif d'un objet à détecter dans une zone d'influence de l'onde radar par rapport au terminal mobile, sur la base d'un paramètre d'émission de l'onde radar et d'un paramètre de réception de l'écho ;
détecter (103) un paramètre de mouvement du terminal mobile ;
corriger le premier paramètre de mouvement relatif en fonction du paramètre de mouvement terminal afin d'obtenir un second paramètre de mouvement relatif ; et
effectuer un apprentissage automatique (105) sur le deuxième paramètre de mouvement relatif par le biais d'un modèle de reconnaissance de geste prédéfini pour obtenir un résultat de reconnaissance de geste, **caractérisé par le fait que** le paramètre de mouvement terminal comprend un paramètre d'attitude, et corriger le premier paramètre de mouvement relatif sur la base du paramètre de mouvement terminal pour obtenir le deuxième paramètre de mouvement relatif comprend :
déterminer (1041) un mode actuel du terminal mobile sur la base du paramètre d'attitude du terminal mobile, le mode actuel du terminal mobile comprenant un mode paysage ou un mode portrait ;
déterminer (1042) un système de coordonnées actuel correspondant au mode actuel ; et
mettre en correspondance (1043) le premier paramètre de mouvement relatif avec le système de coordonnées actuel afin d'obtenir le deuxième paramètre de mouvement relatif.

2. La méthode de la revendication 1, dans laquelle
le paramètre de mouvement terminal comprend en outre au moins une accélération de mouvement et une vitesse angulaire de rotation ; et
le premier paramètre de mouvement relatif comprend au moins l'un des éléments suivants : une vitesse relative, un angle relatif et une distance relative.

3. La méthode de la revendication 2, comprenant en outre :
déterminer une vitesse de déplacement et/ou une distance de déplacement du terminal mobile en fonction de l'accélération du mouvement du terminal mobile ; et
déterminer un angle de rotation du terminal mobile en fonction de la vitesse angulaire de rotation du terminal mobile ;
et, en corrigeant le premier paramètre de mouvement relatif sur la base du paramètre de mouvement terminal pour obtenir le second paramètre de mouvement relatif, comprend en outre au moins l'un des éléments suivants :
corriger la vitesse relative en fonction de la vitesse de déplacement du terminal mobile pour déterminer le deuxième paramètre de mouvement relatif ;
corriger la distance relative en fonction de la distance de déplacement du terminal mobile pour déterminer le deuxième paramètre de mouvement relatif ; et
corriger l'angle relatif en fonction de l'angle de rotation du terminal mobile pour déterminer le deuxième paramètre de mouvement relatif.

4. Un terminal mobile (600), comprenant :
un réseau d'antennes radar (601), configuré pour émettre une onde radar et recevoir un écho renvoyé en réponse à l'onde radar ;
un capteur inertiel (602), configuré pour détecter un paramètre de mouvement du terminal mobile ; et
un module de traitement (603), connecté au réseau d'antennes radar et au capteur inertiel, configuré pour déterminer un premier paramètre de mouvement relatif d'un objet à détecter dans une zone d'influence de l'onde radar par rapport au terminal mobile sur la base d'un paramètre d'émission de l'onde radar et d'un paramètre de réception de l'écho, corriger le premier paramètre de mouvement relatif en fonction du paramètre de mouvement du terminal pour obtenir un deuxième paramètre de mouvement relatif et effectuer un apprentissage automatique sur le deuxième paramètre de mouvement relatif par le biais d'un modèle de reconnaissance de geste prédéfini pour obtenir un résultat de reconnaissance de geste, caracté risé en ce que le paramètre de mouvement du terminal comprend un paramètre d'attitude, et le module de traitement (603) est en outre configuré pour :
déterminer un mode actuel du terminal mobile sur la base du paramètre d'attitude de le terminal mobile, le mode actuel du terminal mobile comprenant un mode paysage ou un mode portrait ;
déterminer un système de coordonnées actuel correspondant au mode actuel ; et
mettre en correspondance le premier paramètre de mouvement relatif avec le système de coordonnées actuel afin d'obtenir le deuxième paramètre de mouvement relatif.

5. Le terminal mobile de la revendication 4, dans lequel
le paramètre de mouvement terminal comprend en outre au moins une accélération de mouvement et une vitesse angulaire de rotation ; et
le premier paramètre de mouvement relatif comprend au moins l'un des éléments suivants : une vitesse relative, un angle relatif et une distance relative.

6. Le terminal mobile de la revendication 5, dans lequel le module de traitement (603) est configuré pour :
déterminer une vitesse de déplacement et/ou une distance de déplacement du terminal mobile en fonction de l'accélération du mouvement, détectée par le capteur inertiel, du terminal mobile et
déterminer un angle de rotation du terminal mobile en fonction de la vitesse angulaire de rotation, détectée par le capteur inertiel, du terminal mobile ;
et, le module de traitement est en outre spécifiquement configuré pour mettre en œuvre au moins l'un des éléments suivants :
corriger la vitesse relative en fonction de la vitesse de déplacement du terminal mobile pour déterminer le deuxième paramètre de mouvement relatif,
corriger la distance relative en fonction de la distance de déplacement du terminal mobile pour déterminer le deuxième paramètre de mouvement relatif, et
corriger l'angle relatif en fonction de l'angle de rotation du terminal mobile pour déterminer le deuxième paramètre de mouvement relatif.

7. Dispositif de détection des gestes (1800), comprenant :
un processeur (1820) ;
un réseau d'antennes radar (601), configuré pour émettre une onde radar et recevoir un écho renvoyé en réponse à l'onde radar ;
un capteur inertiel (602), configuré pour détecter un paramètre de mouvement du terminal mobile ; et
une mémoire (1804) configurée pour stocker des instructions exécutables par le processeur,
dans lequel le processeur est configuré pour exécuter les instructions exécutables stockées dans la mémoire afin de mettre en œuvre les opérations suivantes :
déterminer (102) un premier paramètre de mouvement relatif d'un objet à détecter dans une zone d'influence de l'onde radar par rapport au terminal mobile, sur la base d'un paramètre d'émission de l'onde radar et d'un paramètre de réception de l'écho ;
corriger le premier paramètre de mouvement relatif en fonction du paramètre de mouvement terminal afin d'obtenir un second paramètre de mouvement relatif ; et
effectuer un apprentissage automatique sur le second paramètre de mouvement relatif par le biais d'un modèle de reconnaissance gestuelle prédéfini afin d'obtenir un résultat de reconnaissance gestuelle, **caractérisé par le fait que** le paramètre de mouvement terminal comprend un paramètre d'attitude, et le processeur, lorsqu'il exécute les instructions exécutables stockées dans la mémoire, est en outre configuré pour :
déterminer un mode actuel du terminal mobile sur la base du paramètre d'attitude du terminal mobile, le mode actuel du terminal mobile comprenant un mode paysage ou un mode portrait ;
déterminer un système de coordonnées actuel correspondant au mode actuel ; et
mettre en correspondance le premier paramètre de mouvement relatif avec le système de coordonnées actuel afin d'obtenir le deuxième paramètre de mouvement relatif.

8. Le dispositif de la revendication 7, dans lequel
le paramètre de mouvement terminal comprend en outre au moins une accélération de mouvement et une vitesse angulaire de rotation ; et
le premier paramètre de mouvement relatif comprend au moins l'un des éléments suivants : une vitesse relative, un angle relatif et une distance relative.

9. Le dispositif de la revendication 8, dans lequel le processeur est en outre configuré pour exécuter les instructions exécutables stockées dans la mémoire afin de mettre en œuvre les op érations suivantes :
déterminer une vitesse de déplacement et/ou une distance de déplacement du terminal mobile en fonction de l'accélération du mouvement du terminal mobile ; et
déterminer un angle de rotation du terminal mobile en fonction de la vitesse angulaire de rotation du terminal mobile ;
et, en corrigeant le premier paramètre de mouvement relatif sur la base du paramètre de mouvement terminal pour obtenir le second paramètre de mouvement relatif, comprend au moins l'un des éléments suivants :
corriger la vitesse relative en fonction de la vitesse de déplacement du terminal mobile pour déterminer le deuxième paramètre de mouvement relatif ;
corriger la distance relative en fonction de la distance de déplacement du terminal mobile pour déterminer le deuxième paramètre de mouvement relatif ; et
corriger l'angle relatif en fonction de l'angle de rotation du terminal mobile pour déterminer le deuxième paramètre de mouvement relatif.

10. Support de stockage non transitoire lisible par ordinateur, comportant des instructions stockées qui, lorsqu'elles sont exécutées par le processeur (1820) du dispositif de détection de geste (1800) de l'une quelconque des revendications 7 à 9, amènent le processeur (1820) à mettre en œuvre les opérations telles que définies dans ces revendications.
